Europäisches Patentamt

European Patent Office

Office européen des brevets

(19)

(11) Veröffentlichungsnummer: **0 096 201 B1**

(12) **EUROPÄISCHE PATENTSCHRIFT**

(45) Veröffentlichungstag der Patentschrift:
15.07.87

(51) Int. Cl.⁴: **B 01 J 19/24,** B 01 F 5/06, C 08 F 12/08

(21) Anmeldenummer: 83103946.6

(22) Anmeldetag: 22.04.83

(54) **Reaktor zur kontinuierlichen Durchführung von Polymerisationen in hochviskosen Medien.**

(30) Priorität: 03.06.82 CH 3410/82

(43) Veröffentlichungstag der Anmeldung:
21.12.83 Patentblatt 83/51

(45) Bekanntmachung des Hinweises auf die Patenterteilung:
15.07.87 Patentblatt 87/29

(84) Benannte Vertragsstaaten:
DE FR GB IT NL SE

(56) Entgegenhaltungen:
EP - A - 0 010 571
DE - A - 2 634 471
US - A - 3 052 664
US - A - 3 620 506
US - A - 4 016 348

Ullmans Encyclopädie d. techn. Chemie, 1974, S. 56

(73) Patentinhaber: GEBRÜDER SULZER AKTIENGESELLSCHAFT, Zürcherstrasse 9, CH-8401 Winterthur (CH)

(72) Erfinder: Renken, Albert, Prof., Chemin des Charmilles 46, CH-1025 St. Sulpice (CH)
Erfinder: Tien, Nguyen Khac, Av. de Mont Choisi 63, CH-1006 Lausanne (CH)
Erfinder: Streiff, Felix, Jonas Furrer-Strasse 42, CH-8400 Winterthur (CH)

(74) Vertreter: Dipl.-Ing. H. Marsch Dipl.-Ing. K. Sparing Dipl.-Phys.Dr. W.H. Röhl Patentanwälte, Rethelstrasse 123, D-4000 Düsseldorf (DE)

Beschreibung

Die Erfindung betrifft einen Reaktor gemäss dem Oberbegriff von Anspruch 1.

Nach den bisher bekannten Verfahren zur Polymerisation in Substanz oder Lösungsmittel bis zu hohen Umsätzen kommen absatzweise betriebene Reaktoren oder kontinuierliche Reaktoren mit einheitlicher Verweilzeit des Reaktionsgemisches in Frage.

Bei diskontinuierlichem Betrieb können bis zu Umsätzen von 80% Rührbehälter eingesetzt werden. Da die Viskosität während der Umsetzung stark ansteigt (vergl. Zimmerman, R.L., et al.: Adv. Chem. Ser. 34 (1962)) werden je nach Viskositätsbereich unterschiedliche Rührertypen vorgeschlagen (vergl. Coyle, C.K., et al.: Can. J. Chem. Eng. 48 (1970) und Uhl, V.W.; Voznick, H.P.: Chem. Eng. Prog. 56 (1960)).

Mangelnde Rührintensität führt zu örtlichen Überhitzungen (vergl. Uhl, V.W.; Voznick, H.P.: Chem. Eng. Prog. 56 (1960)) und kann ausgeprägte Temperaturspitzen während des Reaktionsablaufs hervorrufen (vergl. Biesenberger, J.A. et al.: Appl. Pol. Symp. 26 (1975)). Selbstverständlich kann durch Erhöhen der Rührerdrehzahl der Wärmeaustausch intensiviert werden. Eine Drehzahlerhöhung um $10^3$ erhöht den Wärmeübergang um ca. $10^2$. Der relative Energieeintrag steigt jedoch um etwa $10^7$ (vergl. Simon, R.H.M., Chappelear, D.C., in Polymerization Reactors and Processes ACS Symp. Ser. 104 (1979) Seite 71. Herausgeber: J.N. Henderson, T.C. Bouton). Man erreicht daher schnell Bereiche, in denen netto keine Wärme mehr abgeführt werden kann.

Bei Umsetzungen über 80% lassen sich gerührte Behälter nicht mehr einsetzen und das Gemisch muss in Formen, z.B. in Filterpressen ausreagiert werden (vergl. Gerrens, H.: Chem.-Ing.-Techn. 52 (1980)).

Zur Herstellung eines möglichst einheitlichen Polymeren, das durch Monomerenverknüpfung mit Abbruch gebildet wird (z.B. Polystyrol) muss für zeitlich und örtlich konstante Temperaturen und Konzentrationen gesorgt werden. Daher gibt der homogene kontinuierliche Rührkessel-Reaktor die engste Molmassenverteilung. Es handelt sich dabei um die sogenannte Schulz-Flory-Verteilung. Die Uneinheitlichkeiten liegen zwischen $U = 1,5$ für Kombinationsabbruch und $U = 2,0$ für Disproportionierung. Die Uneinheitlichkeit ist durch das Verhältnis Molmassengewichtsmittel $M_W$ zu Molmassenzahlenmittel $M_N$ definiert.

In absatzweise betriebenen isothermen Reaktoren und kintinuierlichen isothermen Kolbenflussreaktoren (ideale Strömungsrohre) wird eine breitere Molmassenverteilung erhalten, was auf die Konzentrationsprofile zurückgeführt werden kann. Treten jedoch in einem kontinuierlich betriebenen Rührkessel Segretationen auf, so nimmt die Molmassenverteilung weiter zu und wird sogar breiter als die im kontinuierlichen Kolbenflussreaktor erreichbare (vergl. Gerrens, H.: Chem.-Ing.-Techn. 52 (1980)).

Die kontinuierliche technische Polymerisation von Styrol in Substanz oder Lösung erfolgt demnach in gut gerührten kontinuierlichen Rührkesseln, Rührkesselkaskaden und Turmreaktoren. Wird ein möglichst hoher Umsatz angestrebt, bietet sich der Turmreaktor, u.U. mit Vorpolymerisation in einem kontinuierlichen Rührkesselreaktor an, wie sie beispielsweise aus De Bell, J.M. et al, in «German Plastics Practice», Herausgeber De Bell, Richardson, Springfield, Ma. (1946), und den US-PS 2 496 653 und 2 727 884 bekannt sind. Zur besseren Wärmeabfuhr sind in den Türmen Kühlschlangen angebracht. In den Turmreaktoren können Temperaturprofile durch geeignete Zu- und Abfuhr von Wärme eingestellt werden (vergl. US-PS 2 727 884). Wird die Vorpolymerisation bis zu relativ hohen Umsätzen durchgeführt, kommen Rührkesselkaskaden zum Einsatz (vergl. GB-PS 1 175 262). Je nach Umsatzgrad und damit wechselndem Viskositätsbereich werden verschiedene Rührertypen und Reaktorformen eingesetzt. Das gleiche gilt für Rührkesselreaktorkaskaden, denen kein Reaktionssturm nachgeschaltet ist (vergl. CA-PS 864 047).

Der Energieaufwand für Mischen und Wärmeübergang wird in diesen Einrichtungen bei höherer Viskosität derart gross, dass die Polymerisation schon bei relativ niedrigen Umsätzen abgebrochen wird.

Aus der US-A-4 016 348 ist ein Rohrreaktor bekannt, in dem statische Mischelemente angeordnet sind. In diesem Rohrreaktor erfolgt eine Vorpolymerisation der Monomeren, während die Endpolymerisation in mindestens einem Behälter mit mechanisch angetriebenen Rührern stattfinden soll.

Hierbei soll im Gebiet niedrigerer Umsetzung, was gleichbedeutend mit niedrigerer Viskosität ist, ein Rohrreaktor in einem Bereich niedrigerer Scherkräfte verwendet werden, während im Gebiet einer höheren Umsetzung, was gleichbedeutend mit höherer Viskosität ist, mindestens ein mechanisch gerührter Reaktor in einem Bereich hoher Scherkräfte benutzt werden soll. Bei einer solchen Vorrichtung kann keine kontrollierte Molekulargewichtsverteilung erreicht werden. Dieses ist aber wegen der starken Viskositätsänderungen bei dem Polymerisationsvorgang von ausschlaggebender Bedeutung.

In einer Anlage zur Durchführung von Polymerisationsprozessen, wie sie aus der US-A-3 052 664 bekannt ist, ist zwar eine Rückführung für ein teilweise polymerisiertes Gemisch vorgesehen. Dieser «loop» Reaktor soll zur Gewinnung von Polystyrol von niedrigem Molekulargewicht dienen, während die weitere Polymerisation aus einer wässrigen Suspension oder Emulsion in gerührten Behältern erfolgen soll.

Der «loop» Reaktor selbst ist leer, d.h. er weist keine statischen Mischelemente auf und ausserdem zwei getrennte, kühlbare und heizbare Zonen.

Der Erfindung liegt die Aufgabe zugrunde, die radikalische Polymerisation von Monomeren, z.B. Styrol zum Erreichen einer engen Molmassenverteilung in einem Reaktor durchzuführen, der sich durch einfache Konstruktion auszeichnet und in dem örtliche Überhitzungen und Segregationen mit wesentlich geringerem Energieaufwand als in den bekannten Reaktoren vermieden werden könne.

Diese Aufgabe wird mit Hilfe der im Kennzeichen des Anspruchs 1 angegebenen Mittel gelöst.

Nach der Erfindung wird eine mehrstufige Ausbildung eines Reaktors verwendet, wobei ein Vorpolymerisator mit einem nachgeschalteten Kolbenflussreaktor kombiniert ist. Da das Reaktionsmedium jedoch sehr zäh ist, lassen sich einfache ungerührte Rohre als Reaktor nicht verwenden. Wegen des sich ausbildenden laminaren Geschwindigkeitsprofils käme es zu einer sehr breiten Verweilzeitverteilung bei nahezu vollständiger Segregation.

Bei der Polymerisation, z.B. von Styrol, kommt es nun darauf an, einen hinreichend hohen Wärmeübergang zur Abführung der Reaktionswärme aus dem hochviskosen Medium zu gewährleisten und gleichzeitig für eine kurze Mischzeit zum Homogenisieren des zugeführten niederviskosen Reaktanden mit dem Gemisch zu sorgen. Der erfindungsgemässe Einsatz von statischen Mischelementen löst dieses Problem.

Eine Anzahl von statischen Mischern, die zur Erreichung der obengenannten Ziele eingesetzt werden können, sind z.B. in der Veröffentlichung «Chem.-Ing.-Techn.» 52 (1980) beschrieben. Als besonders geeignet haben sich Mischertypen erwiesen, wie sie aus der DE-OS 2 943 688 bekannt sind.

Bei der Erfindung wurde erstmals erkannt, dass die Charakteristik eines idealen kontinuierlichen Rührkesselreaktors aufrechterhalten werden kann, selbst wenn das Rückführverhältnis relativ klein ist und bei hohen Umsätzen gearbeitet wird. Unerwartet ist das Ergebnis, dass auch bei niedrigen Rückführverhältnissen die Uneinheitlichkeit des Polymeren, derjenigen des theoretisch berechneten, ideal mischenden Reaktors entspricht. Eine mit abnehmendem Rückführverhältnis auftretende Segregation tritt demzufolge nicht in Erscheinung. Ebenso unerwartet ist, dass die Produktqualität, d.h. die Molmasse und die Breite der Molmassenverteilung im anschliessenden Kolbenflussteil nur unwesentlich verändert wird. Es kann damit in Bereichen gearbeitet werden, die üblicherweise nur mit speziell konstruierten Rührreaktoren zugänglich sind, wobei die einzubringende Energie bei der erfindungsgemässen Ausbildung eines Reaktors etwa um eine Grössenordnung niedriger ist. Zu einer besonders wirtschaftlichen Erreichung eines hohen Umsatzes kann die Rückführung des Polymeren nicht vom Reaktorausgang aus, sondern nach einer Zwischenlänge erfolgen. Als weiterer Vorteil ist die Möglichkeit zu nennen, kontinuierlich örtlich verteilt Reaktanden, z.B. zur Copolymerisation und zur gezielten Beeinflussung der Molmasse und der Molmassenverteilung in den Reaktor zugeben zu können. Der gesamte Polymerisationsreaktor realisiert technisch einfach das angestrebte System eines Reaktors mit vollständiger Rückvermischung mit anschliessendem Kolbenflussreaktor. Es ist darauf hinzuweisen, dass die Kolbenflusscharakteristik trotz der extremen axialen Viskositätsgradienten, die durch eine Umsatzänderung von 30 auf 96% auftritt erhalten bleibt, und dass es nicht zu Durchbrüchen von teilweise reagiertem Medium kommt.

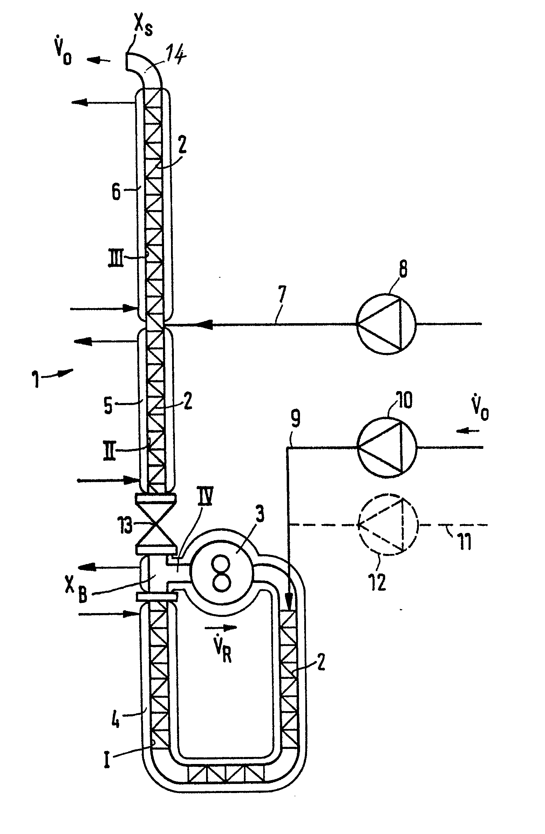

Die Erfindung wird nachstehend anhand eines in der Zeichnung dargestellten Ausführungsbeispiels erläutert.

Die Zeichnung zeigt in schematischer Darstellungsweise in einem Längsschnitt einen Polymerisationsreaktor 1, der beispielsweise zur Gewinnung von Polystyrol dienen kann. Im Ausführungsbeispiel besteht der Reaktor 1 aus einem Rohr, jedoch kann er auch aus mehreren, parallel angeordneten Rohren bestehen.

Der Reaktor weist drei Abschnitte I, II und III auf, in welchen Mischelemente 2 angeordnet sind, die vorteilhaft die im Anspruch 5 angegebene Struktur aufweisen. An der Zuführungsstelle des Reaktors ist eine, mit dem Reaktorrohr zwischen den Abschnitten I und II verbundene, eine Förderpumpe 3 aufweisende Rückführung IV angeschlossen.

Die Abschnitte I, II und III des Reaktorrohrs 1 sind jeweils von einem Doppelmantel 4, 5, 6 umgeben, welche während des Betriebes je nach den Reaktionsbedingungen von einem Heiz- oder Kühlmittel umströmt werden.

Schliesslich mündet in das Reaktionsrohr 1 zwischen den Abschnitten II und III, welche einen Kolbenflussreaktor bilden, eine Zuführleitung 7, in welcher eine Dosierpumpe 8 angeordnet ist. Durch diese Leitung kann eine zusätzliche Komponente, z.B. ein Initiator, wie z.B. Peroxide bzw. ein gleiches oder anderes Monomer als das über die Leitung 9 mittels einer Dosierpumpe 10 in den Abschnitt I eingeleitete Monomer, z.B. Styrol oder ein Additiv, wie beispielsweise Öl oder ein Pigment eingespeist werden.

Zur Erzeugung eines anderen Produktes kann beispielsweise bei einer anderen Polymerisationsreaktion über eine Leitung 11 mittels einer Dosierpumpe 12 ein zweites Monomer in den Reaktor entweder vorgemischt oder getrennt eingeleitet werden. Der Abschnitt I und die Rückführung IV bilden einen Vorpolymerisator, wobei beispielsweise bei der Gewinnung von Polystyrol der Umsatz bis zur Rückführung 30–60% beträgt, und das Verhältnis von zurückgeführter zu der durch Leitung 9 kontinuierlich zugeführten Styrolmenge vorzugsweise kleiner als 10 ist.

Beim Anfahren des Reaktors 1 wird der Vorpolymerisator mit einem, im Reaktor 1 angeordneten Ventil 13 abgeschlossen und das Vorprodukt solange im Kreislauf umgewälzt, bis der gewünschte Umsatz erreicht ist.

Anschliessend wird der Kolbenflussreaktor I, II durch Öffnen des Ventils 13 in Betrieb gesetzt.

Am Austritt wird dann das Reaktionsprodukt mit hohem Umsatz dem Reaktor entnommen.

Wie bereits an vorstehender Stelle erwähnt, bewirken die Mischelemente 2 eine homogene Vermischung und sorgen für eine gleichmässige Reaktionstemperatur über den gesamten Rohrquerschnitt des Reaktors 1.

Im folgenden werden Zahlenbeispiele für die Gewinnung von Polystyrol in einem erfindungsgemäss ausgebildeten Reaktor angegeben.

Beispiel 1

Zur Polymerisation von Styrol wird ein Reaktor entsprechend der Zeichnung verwendet.

Der gesamte Reaktor ist mit statischen Mischelementen vom Typ, wie sie aus der bereits erwähnten DE-OS 2 943 688 bekannt sind, aufgefüllt.

Der Reaktor kann durch Doppelmäntel geheizt oder gekühlt werden, um dem gewünschten Umsatz entsprechende Temperaturen im Reaktor einstellen zu können.

Abschnitt I + Rückführung IV
bilden den Kreislaufteil (Vorpolymerisator)

Abschnitt II + Abschnitt III
bilden den Rohrreaktorteil mit Kolbenflusscharakteristik

In diesem 1. Beispiel soll der Einfluss des Rückführverhältnisses auf die Produktqualität verdeutlicht werden. Dazu wird nur der Betrieb des Kreislaufteils alleine betrachtet.

Reaktionsbedingungen

Temperatur im Abschnitt I und IV $T = 158°C$
Zulauf des Monomeren $\dot{V}_o = 4[1/h]$

Rückführverhältnis $R = \dot{V}_R/\dot{V}_o = 50$

($\dot{V}_o$ und $\dot{V}_R$ sind in der Zeichnung eingetragen)

Versuchsergebnis

. Umsatz $X_B = 60\%$
(s. Zeichnung)

Molmassen (g/mol)

Gewichtsmittel $M_W = 178\,000$
Zahlenmittel $M_N = 93\,000$
Uneinheitlichkeit $U = 1,9$
Viskosität des Reaktionsgemisches $\eta = $ ca. 10 (Pas)
Energieeintrag pro kg Polymer im Kreislaufteil $\rho = 0,017$ (kWh/kg)

In einem zweiten Versuch wurde nun nur das Rückführverhältnis R geändert, um die Auswirkungen auf die Produktqualität zu prüfen.

Rückführverhältnis $R = 10$

Versuchsergebnis

Umsatz $X_B = 60\%$

Molmassen (g/mol)

Gewichtsmittel $M_W = 180\,000$
Zahlenmittel $M_N = 93\,000$
Uneinheitlichkeit $U = 1,9$
Viskosität des Reaktionsgemisches $\eta = $ ca. 10 (Pas)
Energieeintrag pro kg Polymer im Kreislaufteil $\rho = 0,00073$ (kWh/kg)

Wie das Beispiel zeigt, kann das Rückführverhältnis überraschend bis auf 10 verkleinert werden, ohne dass dadurch das Polymer verändert wird.

Der Energieeintrag p pro kg Polymer wird dadurch um etwa das 25-fache reduziert.

| Reaktionsbedingungen | Bsp. 2 | Bsp. 3 | Bsp. 4 |
|---|---|---|---|
| Temperatur T (°C) im Abschnitt I und IV | 135 | 135 | 135 |
| im Abschnitt II | 130 | 145 | 145 |
| im Abschnitt III | 140 | 170 | 180 |
| Zulauf des Monomeren $\dot{V}_o$ (1/h) | 2 | 2 | 2 |
| Versuchsergebnisse | | | |
| Ergebnis nach Abschnitte I + IV | | | |
| Umsatz $X_B(\%)$ | 48 | 48 | 48 |
| Molmassen (g/mol) | | | |
| Gewichtsmittel | 366 000 | 366 000 | 366 000 |
| Zahlenmittel | 191 000 | 191 000 | 191 000 |
| Uneinheitlichkeit U | 1,92 | 1,92 | 1,92 |
| Ergebnis nach Abschnitt III | | | |
| Umsatz $X_s(\%)$ (s. Zeichnung) | 80 | 90 | 93 |
| Molmassen (g/mol) | | | |
| Gewichtsmittel | 330 000 | 263 000 | 251 000 |
| Zahlenmittel | 168 000 | 114 000 | 97 000 |
| Uneinheitlichkeit U | 1,96 | 2,3 | 2,6 |
| Energieeintrag P pro kg Polymer (kWh/kg) | 0,00064 | 0,00056 | 0,00054 |

**Beispiele 2, 3 und 4**

Es wird ebenfalls ein Reaktor verwendet, wie er in der Zeichnung dargestellt ist und im Ausführungsbeispiel beschrieben ist.

In den Beispielen 2–4 sind im Gegensatz zu Beispiel 1 die Abschnitte II und III (Rohrreaktorteil mit Kolbenflusscharakteristik) ebenfalls in Betrieb, und der Gesamtumsatz ist entsprechend höher als im Beispiel 1.

Aus diesen drei Beispielen wird ersichtlich, dass die Produktqualität im Kolbenflussteil nicht wesentlich verändert wird, sofern die Reaktionstemperatur in diesem etwa gleich wie diejenige im Kreislaufteil ist.

Der Energieeintrag pro kg Polymeres wird für diese Reaktorausführung aber geringer als für den reinen Kreislaufreaktor (vergl. Zahlenbeispiel 1) und der erreichbare Umsatz beträgt nahezu 100%.

In diesen drei Ausführungsbeispielen ist deshalb die Kombination von Kreislaufteil und Kolbenflussteil besonders vorteilhaft.

**Patentansprüche**

1. Reaktor zur kontinuierlichen Durchführung von Polymerisationen in hochviskosen Medien, wobei der Reaktor mindestens eine Anzahl von statischen Mischelementen aufweist, dadurch gekennzeichnet, dass der, mindestens aus einem Rohr bestehende Reaktor (1) aus einem Vorpolymerisator (I, IV) mit einem nachgeschalteten Kolbenflussreaktor (II, III) mit Ableitung (14) für das Produkt besteht, wobei die statischen Mischelemente (2) sowohl im Vorpolymerisator (I, IV) als auch im Kolbenflussreaktor (II, III) querschnittsfüllend angeordnet sind, und dass der Vorpolymerisator (I, IV) aus schleifenartig angeordneten Kolbenflussreaktoren mit einer Kreislaufpumpe (3) und mindestens einer Eindosierung (9) für die Edukte besteht.

2. Reaktor nach Anspruch 1, dadurch gekennzeichnet, dass der Rohrmantel (4, 5, 6) gekühlte Abschnitte aufweist.

3. Reaktor nach Anspruch 1, dadurch gekennzeichnet, dass der Rohrmantel (4, 5, 6) beheizte Abschnitte aufweist.

4. Reaktor nach Anspruch 1, dadurch gekennzeichnet, dass an mindestens einer Stelle zwischen dem Rohranfang und dem Rohrende des Kolbenflussreaktors (II, III) eine Zuführung (7) für eine zusätzliche Komponente angeschlossen ist.

5. Reaktor nach Anspruch 1, dadurch gekennzeichnet, dass die im Rohr des Reaktors (I, II, III) angeordneten statischen Mischelemente (2) aus sich kreuzenden Stegen bestehen, die einen Winkel gegenüber der Rohrachse aufweisen, wobei die Stege der statischen Mischelemente in mindestens zwei Gruppen angeordnet sind und die Stege innerhalb einer jeden Gruppe im wesentlichen parallel gerichtet sind und sich die Stege der einen Gruppe mit den Stegen der anderen Gruppe kreuzen, und aufeinanderfolgende statische Mischelemente gegeneinander um einen Winkel von vorzugsweise 90° um die Rohrachse verschwenkt sind.

6. Verfahren zur Gewinnung von Polystyrol mit Hilfe eines Reaktors nach Anspruch 1, dadurch gekennzeichnet, dass der Umsatz bis zur Rückführung 30 bis 60% beträgt, und dass das Verhältnis von zurückgeführter zu zugeführter Menge kleiner als 10 ist.

**Claims**

1. A reactor for the continuous performance of polymerizations in highly viscous media, the reactor having at least a number of static mixing elements, characterised in that the reactor (1), consisting of at least one tube, comprises a pre-polymerizer (I, IV) followed by a plug flow reactor (II, III) having an outlet (14) for the product, the static mixing elements (2) of both the prepolymerizer (I, IV) and also of the plug flow reactor (II, III) being so arranged as to fill up the cross-section; and the prepolymerizer (I, IV) comprises looped plug flow reactors having a circulating pump (3) and at least one metered feed entry (9) for the educts.

2. A reactor according to claim 1, characterised in that the jacket (4, 5, 6) has cooled parts.

3. A reactor according to claim 1, characterised in that the jacket (4, 5, 6) has heated parts.

4. A reactor according to claim 1, characterised in that a feed (7) for an additional component is connected to at least one place between the start of the tube and the end of the tube of the plug flow reactor (II, III).

5. A reactor according to claim 1, characterised in that the static mixing elements (2) disposed in the tube of the reactor (I, II, III) are in the form of crossing webs disposed at an angle to the tube axis, the webs of the static mixing elements being disposed in at least two groups and the webs of any one group extending substantially parallel to one another, the webs of one group crossing the webs of the other group, consecutive static mixing elements being offset relatively to one another by an angle of preferably 90° around the tube axis.

6. A process for the preparation of polystyrene by means of a reactor according to claim 1, characterised in that the conversion as far as the return is from 30 to 60% and the ratio of returned quantity to supplied quantity is less than 10.

**Revendications**

1. Réacteur pour la réalisation en continu de polymérisations dans des milieux de forte viscosité, le réacteur présentant au moins un certain nombre d'éléments mélangeurs statiques, caractérisé par le fait que le réacteur (1), qui consiste en au moins un tube, se compose d'un prépolymérisateur (I, IV) comportant un réacteur à écoulement-piston (II, III) branché à la suite de ce dernier avec une conduite d'évacuation pour le produit, les éléments mélangeurs statiques (2) étant disposés de façon à remplir la section transversale, tant dans le prépolymérisateur (I, IV) que dans le réacteur (II, III) à écoulement-piston, et par le fait que le prépolymérisateur (I, IV) se compose de réacteurs à écoulement-piston disposés en forme de boucle, avec une pompe de recyclage (3) et au moins un système de dosage (9) pour les matières de départ.

2. Réacteur selon la revendication 1, caractérisé par le fait que le manchon du tube (4, 5, 6) présente des parties refroidies.

3. Réacteur selon la revendication 1, caractérisé par le fait que le manchon du tube (4, 5, 6) présente des parties chauffées.

4. Réacteur selon la revendication 1, caractérisé par le fait qu'au moins à un endroit entre le début et la fin du tube du réacteur (II, III) à écoulement-piston est raccordé un conduit d'alimentation (7) pour un composant supplémentaire.

5. Réacteur selon la revendication 1, caractérisé par le fait que les éléments mélangeurs statiques (2) disposés dans le tube du réacteur (I, II, III) consistent en barrettes entrecroisées qui forment un angle par rapport à l'axe du tube, les barrettes des éléments mélangeurs étant disposées en au moins deux groupes, les barrettes de chaque groupe étant orientées de façon sensiblement parallèle, les barrettes d'un groupe se croisant avec les barrettes de l'autre groupe, et les éléments mélangeurs statiques successifs étant orientés les uns vers les autres d'un angle de préférence de 90° par rapport à l'axe du tube.

6. Procédé pour produire du polystyrène au moyen d'un réacteur selon la revendication 1, caractérisé par le fait que la conversion jusqu'au recyclage se monte à 30 à 60% et que le rapport entre la quantité «recyclée» et la quantité d'alimentation est inférieur à 10.